# EUROPEAN PATENT APPLICATION

(11) **EP 3 751 259 A1**
(43) Date of publication of application: **16.12.2020**
(21) Application number: 20179256.1
(22) Date of filing: 10.06.2020
(51) Int. Cl.: G01N 21/77

(54) **METHOD AND SYSTEM FOR DETERMINING THE PRESENCE OF AN ODOROUS MATERIAL ON A FABRIC**

(30) Priority: 12.06.2019 US 201916439020
(71) Applicant: Henkel IP & Holding GmbH, 40589 Düsseldorf (DE)
(72) Inventor: Granja, Mark A, Danbury, 06811, CT (US); Rodriguez, Christopher Michael, Brewster, 10509, New York (US); Bernard, Andrew Neal, East Lyme, 06333, CT (US); Doris, Robert M, Trumbull, 06611, CT (US); Bannerman, William I, Vernon, 06066, CT (US)
(74) Representative: Henkel IP Department

(57) **Abstract**

A method for determining the presence of an odorous material on a fabric includes applying a benzofurazan indicator to the fabric, tagging the odorous material with the indicator, exposing the fabric to a light at a predefined wavelength to produce fluorescence of the tagged odorous material, and observing the fluorescence of the tagged odorous material through a bandpass filter. Also disclosed is a system including the fabric, the indicator applied to the fabric and configured to tag the odorous material, at least one light source arranged about the fabric and configured to direct light on the fabric to produce fluorescence of the tagged odorous material, and an imaging device arranged about the fabric to capture an image of the fabric through a bandpass filter with the image including at least one illuminated portion representing the tagged odorous material. Also disclosed is a method for determining the efficacy of a laundry product.

## Description

The present disclosure relates generally to a method and system for determining the presence of an odorous material on a fabric. More particularly, the present disclosure relates to a method and system for determining the presence of an odorous material on a fabric by tagging the odorous material with a benzofurazan indicator and exposing the fabric to light at a predefined wavelength to produce fluorescence of the tagged odorous material.

Technical laundry cleaning assessment is typically limited to assessing stain removal. However, consumers tend to assess the cleanliness of a fabric based on how good the fabric smells. Odors, typically formed from bacterial metabolization of glandular secretions such as sebum or formed from exposure to environmental odors such that those generated from food, are invisible to the naked eye. Therefore, the presence of odor on a fabric is usually determined through olfactive techniques, e.g., smelling. For instance, the presence of odor on a fabric has been determined by a sensory panel or an instrumental assessment using electronic noses or analytical techniques. Some techniques, however, do not always reveal the presence of odor or an odorous material on the fabric.

A method for determining the presence of an odorous material on a fabric is disclosed. The method comprises the steps of applying an indicator to the fabric with the indicator being a benzofurazan, tagging the odorous material with the indicator, exposing the fabric including the tagged odorous material to a light at a predefined wavelength to produce fluorescence of the tagged odorous material, and observing the fluorescence of the tagged odorous material on the fabric through a bandpass filter.

The present disclosure further provides a system for determining the presence of an odorous material on a fabric. The system comprises the fabric including the odorous material, an indicator applied to the fabric and configured to tag the odorous material to form a tagged odorous material with the indicator being a benzofurazan, at least one light source arranged about the fabric and configured to direct a light at a predefined wavelength on the fabric with the light producing fluorescence of the tagged odorous material on the fabric, and an imaging device arranged about the exposed fabric to capture an image of the fabric including at least one illuminated portion of the exposed fabric representing the tagged odorous material.

A method of determining the efficacy of a laundry product is also disclosed. The method includes the steps of applying an odorous material to first and second fabrics, applying an indicator to each of the first and second fabrics with the indicator being a benzofurazan, tagging the odorous material on each of the first and second fabrics with the indicator, and washing only the first fabric utilizing a laundry product. The method further comprises the steps of exposing each of the first and second fabrics to a light at a predefined wavelength to produce fluorescence of the tagged odorous material on each of the first and second fabrics, observing the fluorescence of the tagged odorous material on each of the first and second fabrics, and comparing the fluorescence of the observed first and second fabrics.

The advantages of the present disclosure will be readily appreciated as the same becomes better understood by reference to the following detailed description when considered in connection with the accompanying drawings.
FIG. 1 is a photograph of a test set-up for performing a method for determining the presence of an odorous material on a fabric, according to an embodiment of the present disclosure.
FIG. 1A is a schematic illustration of an imaging device including a lens and a bandpass filter positioned over the lens.
FIG. 2 is a photograph of an atomizer including an indicator solution.
FIG. 3 is a photograph of the atomizer including a foil wrapped around the atomizerto form an opaque shield.
FIG. 4 is a photograph of a fabric sample and application of a test solution including human sebum to the fabric sample using a pipette.
FIG. 5 is a photograph of a garment disposed in a chemical fume hood and the indicator solution applied to the garment with the atomizer.
FIG. 6 is a screen shot of a computing device showing a surface plot of the garment having illuminated portions with varying amounts of odorous material present represented by varying colors, where red colors represent higher amounts of odorous material present, yellow colors represent lower amounts of odorous material present, green colors represent slight amounts of odorous material present, and blue colors represent no odorous material present.
FIGS. 7A and 7B are photographs of an illuminated unwashed fabric (FIG. 7A) and an illuminated washed fabric (FIG. 7B).

The following detailed description is merely exemplary in nature and is not intended to limit the method and system of the present disclosure. Furthermore, there is no intention to be bound by any theory presented in the preceding background or the following detailed description.

Embodiments of the present disclosure are generally directed to a system and method for determining the presence of an odorous material on a fabric. For the sake of brevity, conventional techniques related to the method and system may not be described in detail herein. Moreover, the various tasks and process steps described herein may be incorporated into a more comprehensive procedure or process having additional steps or functionality not described in detail herein. For example, various steps in the manufacture of the system or equipment used for the system are well-known and so, in the interest of brevity, many conventional steps will only be mentioned briefly herein or will be omitted entirely without providing the well-known process details.

Embodiments of a method and system for determining the presence of an odorous material on a fabric are described in detail below. The presence of the odorous material on the fabric is determined by tagging the odorous material with an indicator to form a tagged odorous material having a visual detection property. The tagged odorous material luminesces, in particular fluoresces, in the presence of light having a predefined wavelength range, enabling an observer (such as a person) to visualize the presence of the odorous material on the fabric when viewed through a bandpass filter. Determination of the presence of an odorous material on a fabric by visual inspection is more effective and accurate than olfactive interpretation or other olfactive techniques, particularly in instances where the odor of the odorous material on the fabric is not easily detectable by the observer. Additionally, visualization of the odorous material may be used for a variety of purposes, such as for assessing the cleaning efficacy of a laundry product, textile technologies, finishes, and/or for demonstration purposes.

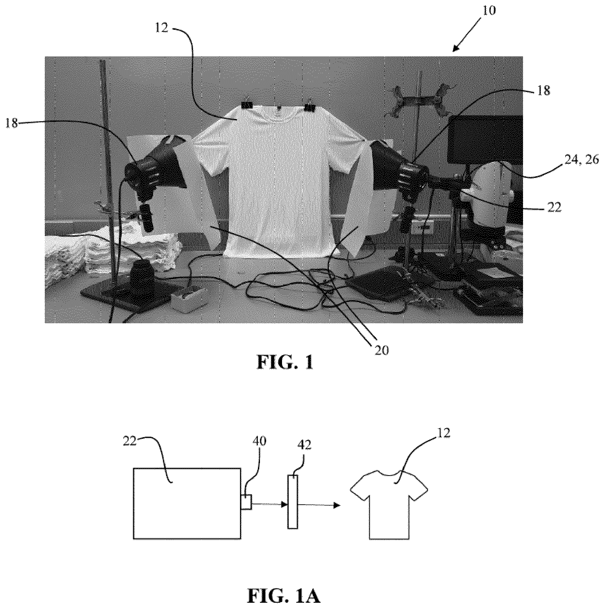

A method for determining the presence of an odorous material on a fabric is described below with reference to a photograph of a test set-up, referred to below as a system 10, shown in FIG. 1. The fabric, identified by reference character 12 in FIG. 1, is an article produced or formed by weaving, knitting, or combining fibers or threads of natural materials (such as cotton, wool, silk, etc.) and/or synthetic materials (such as nylon, polyester, etc.). The fabric 12 may be formed into a variety of articles including clothing, blankets, sheets, towels, or other articles adapted to be worn by or come into contact with the body of an animal, such as a human being.

For purposes of practicing the method, the fabric 12 may be an unwashed fabric or a washed fabric. An unwashed fabric is one that has not been washed, laundered, and/or cleaned after the fabric has been worn by or has come into contact with the body of an animal. Typically, the unwashed fabric includes one or more odorous materials thereon, such as those generated by the bacterial breakdown of human-generated sebum and/or sweat. It should be appreciated that other odorous materials could be present including, but not limited to, tannins from natural products such as plants, seeds, fruits, wood, and the like, perfumes, environmental substances, etc. A washed fabric is one that has been washed, laundered, and/or cleaned utilizing one or more laundry products, such as a laundry detergent, laundry soap, and/or the like. Washing, laundering, and/or cleaning may be performed utilizing an automatic washing machine or may be performed manually, such as by hand. After washing, the fabric 12 may or may not include the odorous material depending, at least in part, on the effectiveness of the washing technique and/or the laundry product used.

The odorous material is or includes one or more chemical substances least partially responsible for producing an odor. As one example, the odor is one produced by the human body, commonly referred to as body odor. The body odor may be produced when sebum, which is an odorless secretion of the sebaceous glands of the human body, is metabolized by bacteria on the skin which produces one or more odorous materials. Non-limiting examples of odorous materials include aldehydes, ketones, and/or carboxylic acids (such as odorous butyric acid, isovaleric acid, hexanoic acid, and phenylacetic acid). The odorous material(s) is invisible to the naked eye and is typically perceivable by olfactive techniques such as smelling.

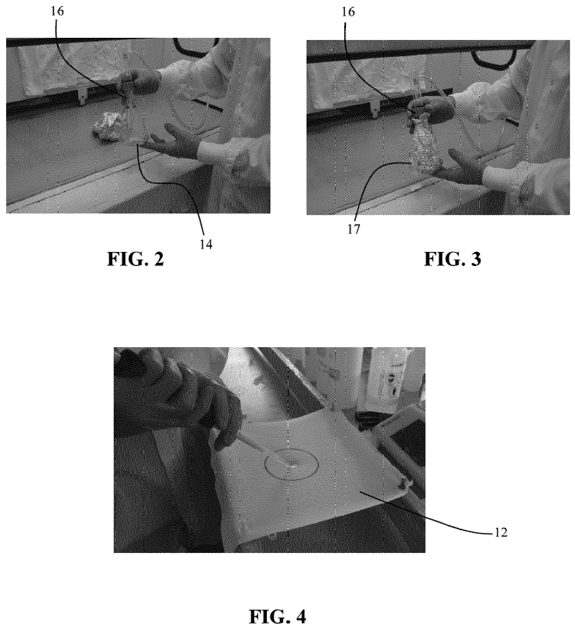

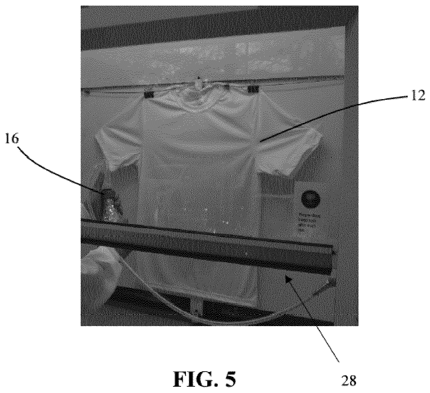

The method includes applying an indicator to the fabric 12. The indicator may be applied to the fabric 12 in any suitable fashion and/or utilizing any suitable technique. In an embodiment, the method includes forming an indicator solution 14 including the indicator at least partially dissolved in a solvent (as shown in FIG. 2) and applying the indicator solution 14 to the fabric 12 (as shown in FIG. 5). The indicator solution 14 may be formed by combining the indicator with a solvent. In some instances, the combination is mixed, such as by stirring or agitating, to at least partially dissolve the indicator in the solvent. Any indicator not dissolved in the solvent may be referred to as an indicator residue. The indicator solution 14 may have any desirable concentration. In an embodiment, the concentration of the indicator solution 14 is from about 100 mmol/L to about 400 mmol/L. In another embodiment, the concentration of the indicator solution 14 is from about 200 mmol/L to about 300 mmol/L. In yet another embodiment, the concentration of the indicator solution 14 is about 250 mmol/L. It should be appreciated that the concentration may be increased (such as by adding more indicator) or decreased (such as by adding more solvent) based on the size of the fabric 12 and/or amount odorous material present or believed to be present on the fabric 12.

The solvent may be any suitable solvent. In one embodiment, the solvent is an aqueous solvent; e.g., water. In another embodiment, the solvent is a nonaqueous solvent. Non-limiting examples of nonaqueous solvents that may be used include hexane, heptane, toluene, petroleum ether, acetone, methyl acetate, ethyl acetate, ethanol, acetonitrile, methanol, isopropanol, tetrahydrofuran, and combinations thereof. In another embodiment, the solvent is a polar solvent or a nonpolar solvent. In a preferred embodiment, the solvent is acetonitrile.

The indicator is a benzofurazan; in the present application the terms "benzofurazan" or "benzofurazans" refer always to one or more compounds selected from benzofurazan and its derivatives. In a particularly preferred embodiment of the present invention at least one benzofurazan derivative is used as indicator. This means that either one benzofurazan derivate as such or a combination of two or more different benzofurazan derivatives is used as indicator.

Non-limiting examples of benzofurazans include 4-fluoro-7-nitro-2,1,3-benzoxadiazole (NBD-F), 4-N,N-dimethylaminosulfonyl-7-fluoro-2,1,3-benzoxadiazole (DBD-F), 4-aminosulfonyl-7-fluoro-2,1,3-benzoxadiazole (ABD-F), ammonium 7-fluoro-2,1,3-benzoxadiazole-4-sulfonate (SBD-F), 4-hydrazino-7-nitro-2,1,3-benzoxadiazole (NBD-H), 4-N,N-dimethylaminosulfonyl-7-hydrazino-2,1,3-benzoxadiazole (DBD-H), 4-nitro-7-N-piperazino-2,1,3-benzoxadiazole (NBD-PZ), 4-N,N-dimethylaminosulfonyl-7-N-piperazino-2,1,3-benzoxadiazole (DBD-PZ), 4-(N-chloroformylmethyl-N-methyl)amino-7-N,N-dimethylaminosulfonyl-2,1,3-benzoxadiazole (DBD-COCI), 7-N,N-dimethylaminosulfonyl-4-(2,1,3-benzoxadiazolyl) isothiocyanate (DBD-NCS), and combinations thereof. Without being bound by any particular theory, it has been found that benzofurazan indicators interact with odorous materials produced from human-generated sebum and/or sweat to form a reaction product that illuminates, in particular fluoresces, when exposed to a certain wavelength of light. The illuminated reaction product is readily and easily detectable by an observer through visual inspection when viewed through a bandpass filter of appropriate size, as described in further detail below.

The indicator, in the form of the indicator solution 14, may be applied to the fabric 12 by any suitable method such as, but not limited to, spraying, dipping, brushing, dropping, dabbing, swabbing, and/or other similar method. In certain embodiments, the indicator is applied to the fabric 12 utilizing an applicator 16, such as an atomizer, sprayer, or nebulizer as shown in FIGS. 2 and 3. The indicator solution 14 is introduced into the applicator 16, and the applicator 16 is used to apply the indicator solution 14 to the fabric 12. In an embodiment, the applicator 16 is wrapped or covered, such as with a foil 17 as shown in FIG. 3, to form an opaque shield to prevent the indicator and/or the solvent from reacting in response to light. Other types of applicators may also be used, such as brushes, swabs, pipettes, and/or the like. The indicator solution 14 is applied to the fabric 12 in any appropriate or suitable amount. Additionally, the indicator solution 14 may be applied to suspect areas of the fabric 12; e.g., areas of the fabric 12 believed to include the odorous material. Alternatively, the indicator may be applied to the entire (i.e., all areas of) the fabric 12.

The indicator of the indicator solution 14 is configured to chemically react with the odorous material on the fabric 12 to form a reaction product having an altered detection property, such as the ability to fluoresce in the presence of light at a predefined wavelength or wavelength range. The reaction product includes the odorous material tagged with the indicator and is referred to herein as a tagged odorous material. The tagged odorous material has a visual detection property, particularly, the tagged odorous material fluoresces when exposed to light at a predefined wavelength. When illuminated, the tagged odorous material is visually detectable by an observer by any suitable visual detection technique.

In the embodiments described herein, the odorous material is tagged with the benzofurazan to form the tagged odorous material that illuminates when exposed to a certain wavelength of light. 4-hydrazino-7-nitro-2,1,3-benzoxadiazole (NBD-H) has a high affinity to aldehydes and ketones. Once NBD-H forms a complex with the aldehyde or ketone, the reaction product (tagged odorous material) fluoresces when exposed to a certain wavelength of light. Accordingly, and in one embodiment, the indicator is 4-hydrazino-7-nitro-2,1,3-benzoxadiazole (NBD-H) when the odorous material on the fabric 12 is or includes an aldehyde or a ketone. The NBD-H reacts with carbonyl groups of the aldehyde or ketone to form the reaction product of the aldehyde or ketone tagged with the NBD-H. The reaction product fluoresces when exposed to light at a predefined wavelength to enable an observer to see, observe, or visualize the odorous material on the fabric 12 when viewed through a bandpass filter of appropriate size. For example, the product including the odorous material tagged with NBD-H fluoresces when exposed to light at a wavelength of from about 380 nm to about 500 nm, and is observable when viewed through a 550 nm bandpass filter.

In another embodiment, 4-(N,N-dimethylaminosulfonyl)-7-piperazinobenofurazan (DBD-PZ) fluoresces in the presence of fatty acids, particularly carboxylic acids. In this embodiment, the indicator is 4-(N,N-dimethylaminosulfonyl)-7-piperazinobenofurazan (DBD-PZ) when the odorous material on the fabric 12 is a carboxylic acid. The DBD-PZ reacts with an activated form of the carboxylic acid to form a reaction product of the carboxylic acid tagged with DBD-PZ. The carboxylic acid is activated to form a leaving group favorable for the subsequent chemical reaction with DBD-PZ. One way of activating the carboxylic acid is by reacting the carboxylic acid with 2,2'-dipyridyldisulfide and triphenylphosphine to form a carboxylic acid including a pyridyl leaving group as shown by the reaction (1) below.

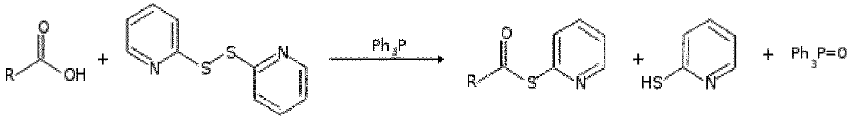

It should be appreciated that the carboxylic acid may be activated in other ways, not limiting to reaction (1) above.

Once the carboxylic acid has been activated, the DBD-PZ reacts with the activated carboxylic acid to form the reaction product (tagged odorous material) having detection properties suitable for subsequent analytics. Similar to the aldehyde or ketone tagged with the NBD-H described above, the reaction product in this embodiment fluoresces when exposed to a light at a predefined wavelength to enable an observer to see, observe, or visualize the odorous material on the fabric 12 when viewed through a bandpass filter of appropriate size. For example, the product including the odorous material tagged with DBD-PZ fluoresces when exposed to light at a wavelength of from about 380 nm to about 500 nm, and observed when viewed through a 550 nm bandpass filter.

In the embodiments described above, a single indicator is used for the method and system of the present disclosure. It is contemplated that more than one or a combination of indicators (such as a combination of two or more benzofurazans) may be used. In a particularly preferred embodiment the indicator is a combination of at least 4-hydrazino-7-nitro-2,1,3-benzoxadiazole (NBD-H) and 4-(N,N-dimethylaminosulfonyl)-7-piperazinobenofurazan (DBD-PZ).

Once the odorous material has been tagged with the indicator, the method includes the step of exposing the fabric including the tagged odorous material to a light at a predefined wavelength. With reference again to FIG. 1, the exposing step is accomplished by arranging at least one light source 18 about the fabric 12 including the tagged odorous material, and directing a light from the at least one light source 18 on the fabric 12. As shown in FIG. 1, two light sources 18 are arranged about the fabric 12. It should be appreciated that any number of light sources 18 may be used, such as one, two, three, or more light sources 18. Additionally, the light source(s) 18 may be arranged at any distance from the fabric 12. However, a washout effect during subsequent imaging may occur in instances where the light source(s) 18 is arranged too close to the fabric 12 as understood by one skilled in the art. The washout effect may be eliminated or reduced by positioning a diffuser 20 (such as a sheet of wax paper) over or in front of the light source (s) 18 as shown in FIG. 1. In an embodiment, the light source(s) 18 is arranged from about 0.3 to about 0.9 meters from the fabric 12. It should be appreciated that the distance from the fabric 12 is adjustable to accommodate variations in the emitted light from various light sources 18.

The light source(s) 18 may be selected from any light source that can generate blue light within a wavelength of from about 380 nm to about 500 nm. The blue light generated by the light source(s) 18 produces fluorescence of the tagged odorous material on the fabric 12. In an embodiment, the blue light generated by the light source(s) 18 produces fluorescence of the tagged odorous material on the fabric 12 such that the presence of the odorous material on the fabric 12 can be detected. In another embodiment, the exposing step is further defined as exposing the fabric including the tagged odorous material to a light at a wavelength of from about 450 nm to about 490 nm to produce fluorescence of the tagged odorous material on the fabric 12. In still another embodiment, the fabric 12 is exposed to a light at a wavelength of about 470 nm to produce fluorescence of the tagged odorous material on the fabric 12.

The method further includes the step of observing the fluorescence of the tagged odorous material on the fabric 12. The observing step is performed subsequent to the exposing step. For example, prior to the observing step, the method includes the step of capturing an image of the exposed fabric 12 including at least one illuminated portion of the exposed fabric 12 representing the tagged odorous material. The image may be captured utilizing any suitable imaging device 22, such as a camera, arranged about the exposed fabric 12. As shown in FIG. 1A, the imaging device 22 has a lens 40 and a bandpass filter 42, such as green 550 nm bandpass filter, placed over the lens 40. In an alternative embodiment, the observing step could be performed at the same time as the exposing step.

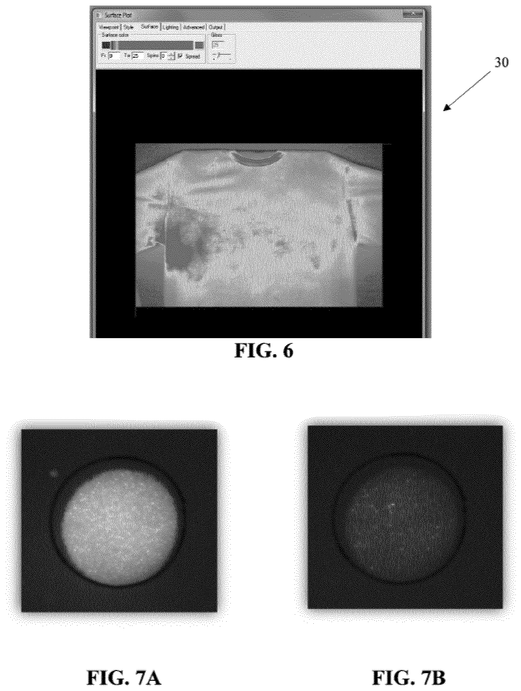

In an embodiment, the at least one illuminated portion of the exposed fabric 12 is further defined as a plurality of illuminated portions with or exhibiting varying intensities of illumination corresponding to varying amounts of the tagged odorous material on the exposed fabric 12. Prior to the observing step and utilizing a processor 24 configured to execute computer-readable instructions of a program, the method includes the step of generating a surface plot 30 of the imaged fabric including the plurality of illuminated portions with or exhibiting the varying intensities of illumination, as shown in FIG. 6 for example. The varying intensities of illumination are represented in the surface plot 30 using identifiers and denote the varying amounts (or concentrations) of the tagged odorous material present on the exposed fabric. In the illustrated embodiment, as shown in FIG. 6, the varying identifiers are varying colors, such as various shades of red to denote higher intensities of illumination (which correspond to higher amounts of tagged odorous material), various shades of yellow to denote lower intensities of illumination (which correspond to lower amounts of tagged odorous material), and various shades of green to denote slight amounts of odorous material present. Various shades of blue denote the absence of an odorous material on the fabric 12. It should be appreciated that the identifiers could have other configurations, not limited to varying colors.

Referring again to FIG. 1, the system further includes a computing device 26, such as a personal computer (PC), including the processor 24 and a memory device. The processor may be a central processing unit (CPU), or a controller, microcontroller, microprocessor, application specific integrated circuit (ASIC) and/or the like working in conjunction with the CPU to perform the function of a general purpose computer. The processor 24 executes computer or software programs for performing various computer-related functions. The memory is coupled to the processor 24 and may include a read only memory (ROM) and a random access memory (RAM) for storing computer-readable instructions of the computer or software programs. In an embodiment, the memory stores computer-readable instructions of a program for generating the surface plot 30 of the imaged fabric including the plurality of illuminated portions. The processor 24 executes the computer-readable instructions that causes the processor to perform the function of generating the surface plot 30 of the imaged fabric including the illuminated portions of the fabric with varying intensities of illumination represented by the varying identifiers (e.g., colors) to denote the varying amounts of the tagged odorous material present on the imaged fabric. In an embodiment, the processor 24 is configured to execute Image-Pro® Plus software available from Media Cybernetics (Rockville, Maryland). Other software programs capable of generating surface plots may also be used. An example of a surface plot 30 of a fabric 12, particularly a garment, is shown in FIG. 6. The surface plot 30 shows higher amounts of odorous material in red in areas of the garment including the neckline, the under-arm area, and the chest area adjacent the under-arm area. The surface plot 30 also shows lower amounts of odorous material in yellow, which covers most of the chest area of the garment. Any areas of the garment having a slight amount of odorous material present is shown in green, and areas with no odorous material present is shown in blue.

The method for determining the presence of the odorous material on the fabric may be leveraged for determining the efficacy of a laundry product, such as a laundry detergent. For example, the method may be applied to washed and unwashed fabrics, and the results compared to determine the effectiveness of the laundry product used for the washed fabric. Alternatively, the method may be applied to two fabrics each washed with a different laundry product to determine the effectiveness of one laundry detergent compared to effectiveness of the other laundry detergent.

In an embodiment, a method for determining the efficacy of a laundry product includes the steps of applying an odorous material to first and second fabrics. The first and second fabrics may be two distinct fabrics, such as two distinct garments. Alternatively, the first and second fabrics may be first and second halves of a single garment, such as the fabric 12. The odorous material may be applied by wearing the fabric 12 while performing an activity, such as during a workout, such that human-generated sebum and/or sweat deposits onto the fabric 12. In a laboratory setting, the odorous material may be applied by forming a laboratory solution including sebum, and applying the laboratory solution to the fabrics using any suitable application technique such as by pipetting as illustrated in FIG. 4. The laboratory solution may be applied to a part of the fabric 12 or to the whole fabric 12.

The method further includes applying the indicator, in particular the indicator solution 14, to each of the first and second fabrics. The indicator is the benzofurazan as described in detail above. The method further includes tagging the odorous material on each of the first and second fabrics with the indicator. The step of tagging the odorous material with the indicator may be the same as described in detail above.

Once the odorous material has been tagged, the first fabric is washed utilizing a laundry product. In instances where the first and second fabrics halves of a single garment 12, the garment 12 is separated into two halves such as by tearing or cutting, and one of the halves (i.e., the first fabric) is placed into an automatic washing machine and washed using the laundry product using a typical or standard wash cycle. Alternatively, the first fabric is washed manually, such as by hand, using the laundry detergent.

After the washing step, the method further includes the steps of exposing the first and second fabrics to a light at a predefined wavelength to produce fluorescence of the tagged odorous material on each of the first and second fabrics. The method further includes the step of imaging each of the exposed first and second fabrics to produce first and second images. The first image includes at least one illuminated portion of the exposed first fabric representing the tagged odorous material present on the first fabric. The second image includes at least one illuminated portion of the exposed second fabric representing the tagged odorous material present on the second fabric. The method further includes the step of observing the fluorescence of the tagged odorous material on each of the first and second fabrics. The exposing, imaging, and observing steps are the same as described above, but are performed for each of the first and second fabrics.

In an embodiment, the at least one illuminated portion of the exposed first fabric is further defined as a plurality of illuminated portions of the exposed first fabric with or exhibiting varying intensities of illumination corresponding to varying amounts of the tagged odorous material on the exposed first fabric. The at least one illuminated portion of the exposed second fabric is further defined as a plurality of illuminated portions of the exposed second fabric with or exhibiting varying intensities of illumination corresponding to varying amounts of the tagged odorous material on the exposed second fabric. Utilizing the processor 24 configured to execute computer-readable instructions, the observing step includes the step of generating a first surface plot of the imaged first fabric including the plurality of illuminated portions with or exhibiting the varying intensities of illumination illustrating the varying amounts of the tagged odorous material present on the first imaged first fabric. The observing step further includes the step of generating a second surface plot of the imaged second fabric including the plurality of illuminated portions with or exhibiting the varying intensities of illumination illustrating the varying amounts of the tagged odorous material present on the second imaged first fabric. The first and second surface plots are generated using the Image-Pro® Plus software program as previously described.

The method further includes the step of comparing the fluorescence of the observed first and second fabrics. The comparing step includes comparing the plurality of illuminated portions on the first surface plot with the plurality of illuminated portions on the second surface plot, and observing a change in intensity of the illuminated portions of the first and second surface plots. The change in intensity may be observed by visual inspection and/or by measurements using information obtained from the surface plot. For example, if the first surface plot shows many red areas and the second surface plot shows just yellow and green areas, the results illustrate that the laundry product used during the washing step removed some of the odorous material from the first fabric.

It should be appreciated that the observing step may be accomplished without performing the imaging step. In this instance, the fabrics are observed during illumination of the tagged odorous material when exposed to the blue light (wavelength of from about 380 nm to about 500 nm) when viewed through a 550 nm bandpass filter, and the comparing step is performed based on these results. FIG. 7A is a photograph showing the illuminated unwashed fabric (second fabric) and FIG. 7B is a photograph showing the illuminated washed fabric (first fabric). As evident from the photographs, there is less illuminated portions of the washed fabric compared to the unwashed fabric illustrating the effectiveness of the laundry product used during washing.

The following examples are meant to illustrate the invention and are not to be viewed in any way as limiting the scope of the present claims.

### EXAMPLES

An indicator including 7-hydrazino-4-nitro-2,1,3-benzoxadiazole (NBD-H) is utilized to visualize odorous materials, specifically aldehyde compounds in human sweat. Two techniques are described, with one of the techniques used for lab-generated samples in sebum and the other one of the techniques used for an actual garment. The results from both of the techniques are useful for monadic expositions and for analysis between laundry cleaning products.

### Preparation of the Indicator Solution

About 100 mL of a 250 mmol/L indicator solution including the NBD-H indicator is prepared as follows. Using a weigh boat and spatula, 5.7 mg of NBD-H powder is measured and set aside. 100 mL of acetonitrile is placed into a 250 mL beaker, and the NBD-H powder is introduced into the beaker (by tapping). The beaker is swirled slightly to dissolve the NBD-H in the acetonitrile solvent. The solution is poured into an atomizer flask as shown in FIG. 2. The solution is poured back into the beaker, swirled, and then poured back into the atomizer flask at least once to remove the residual NBD-H remaining in the beaker. Since acetonitrile and NBD-H are sensitive to light, an opaque shield is created by wrapping the atomizer flask in foil as shown in FIG. 3.

### Preparation of Lab-Generated Samples in Sebum

A sebum test solution including 25 wt% sebum, 10 wt% heptanal, and 65 wt% heptane is prepared as follows. 25 grams of sebum at body temperature (about 37°C, 100°F) is melted in a beaker using a hot plate. It is important not to exceed 37°C to prevent the aldehyde from flashing. Once the sebum is melted, about 10 grams of heptanal and about 65 grams of heptane is added to the beaker. The heptane is added to make the solution less viscous and wick better into the fabric. Once all of the components are in solution, the mixture is transferred to a resealable bottle so the excess can be used for later testing. Notably, the test solution solidifies after a few hours in the bottle.

The fabric samples are prepared by drawing 3-inch circles. The circles are used as a target for identifying where the test solution was applied to the fabric. The test solution is softened by immersing the resealable bottom in a warm water bath at a temperature no higher than 32°C (90°F) to prevent aldehyde from flashing. A laser thermometer is used to check the temperature on the outside of the bottle. Typically, 27°C (80°F) is preferred, as the heptane will keep the sebum in solution.

A micropipette is set to 400 µL of solution. Starting at the center of the circle on the fabric sample, the pipette is slowly depressed to deposit the test sample at the center and then slowly working outwardly in a spiral, as shown in FIG. 4. This process ensures even application of the test solution and wicking. The sample is set aside at room temperature until the sample is dry.

### Tagging Lab-Generated Sample with the Indicator

The fabric sample including test solution is hung in a hood 28, such as shown in FIG. 5. The atomizer flask is connected to an air pressure source, with air pressure increasing slowing to ensure enough force to spray the indicator solution without splotches. The amount of air pressure is determined by trial and error by a person skilled in the art. Once the correct air pressure is found, the indicator solution is sprayed in the circles in ten quick, tight circular motions from about 300 mm away from the fabric. Once the indicator solution has been applied, the hood is closed completely and at least 30 seconds of airflow is allowed to flash off any access acetonitrile solvent from the indicator solution. The lab-generated sample is set aside for subsequent imaging.

### Garment Sample

A polyester garment worn by a human being during a physical workout is acquired. The indicator solution formulated as described above is applied to the garment utilizing the spraying technique. Notably, the indicator solution may be applied to the garment still damp from the sweat, but is allowed to dry before imaging.

### Imaging

As shown in FIG. 5, the garment is hung in an upward position against the wall and blue lights (i.e., lights at a wavelength of about 380 nm to about 500 nm) are positioned about 0.6 meters (about 2 feet) from the garment. Due to the variability in the between the light bulbs, the distance of the light bulbs from the garment is adjusted as necessary. Notably, if the lights are positioned too far away from the garment, the image will turn out dim. On the other hand, if the lights are positioned too close to the garment, a washout effect occurs, and the image can get lost in the noise. Additionally, a sheet of wax paper is positioned over the bulb housings to prevent the washout effect by acting as a diffuser.

A camera is setup utilizing a tripod at a distance from the garment and where the bulb housings are outside of the picture/image frame. The camera is set based on the lens type and the ambient light within the room. F-stop is set at a level 2 with a shutter speed of 1/6^{th} of a second. These settings allow a wide enough aperture to capture all of the light differences while not being dark or washed out. The ambient light in the room is turned off and a 550 nm bandpass filter is positioned in front of the camera lens before pressing the shutter button to capturing an image. All of the samples are set aside to be washed.

### Washing

All of the test samples are washed utilizing a top load washing machine operated at 32°C (90°F) at 120 ppm for a twelve-minute wash cycle and a cold rinse. One of the garments is cut in half, and one half of the garment is washed in laundry product A and the other half of the garment is washed in laundry product B. Utilizing the same garment for washing when comparing different laundry products helps eliminate inter-sample variability. The test samples are air dried on a dryer rack.

### Imaging and Analysis

The cut garment is taped back together with clear tape, and the garment is reimaged utilizing the same equipment and set up described above. Notably, the indicator solution is not re-applied. The amount of aldehyde/NBD-H complex remaining on the garment is analyzed by uploading the image of the garment to the Image-Pro® Plus software program on the processor, and generating a surface plot 30 of the image as shown in FIG. 6. The surface plot 30 shows illuminated portions of the fabric, with red indicating a higher intensity of odorous material, yellow indicating a lower intensity of odorous material, and green indicating very little or no odorous material present. As mentioned above, the higher amounts of odorous material are shown in red which include the neckline, the under-arm area, and the chest area adjacent the under-arm area. The surface plot 30 also shows lower amounts of odorous material in yellow, which covers most of the chest area of the garment. Any areas of the garment that does not have any odorous material present is shown in green.

As used herein, the term "about" is understood by persons of ordinary skill in the art and varies to some extent depending upon the context in which the term is used. If there are uses of the term which are not clear to persons of ordinary skill in the art, given the context in which the term is used, "about" means up to plus or minus 10% of the particular term.

It is to be understood that one or more values described above may vary by +/-5%, +/-10%, +/-15%, +/-20%, etc. so long as the variance remains within the scope of the present disclosure. It is also to be understood that the appended claims are not limited to express particular compounds, compositions, or methods described in the detailed description, which may vary between particular embodiments which fall within the scope of the appended claims.

It is also to be understood that any ranges or subranges relied upon in describing the various embodiments of the present disclosure independently and collectively fall within the scope of the appended claims, and are understood to describe and contemplate all ranges including whole and/or fractional values therein, even if such values are not expressly written herein. One of skill in the art readily recognizes that the enumerated ranges and subranges sufficiently describe and enable various embodiments of the present disclosure, and such ranges and subranges may be further delineated into relevant halves, thirds, quarters, fifths, and so on. Additionally, an individual number within a disclosed range may be relied upon and provides adequate support for specific embodiments within the scope of the appended claims. For example, a range "of from about 100 to about 200" includes various individual integers such as 101, 102, 103, etc., as well as individual numbers including a decimal point (or fraction) such as 100.1, 100.2, etc., which may be relied upon and provide adequate support for specific embodiments within the scope of the appended claims.

The invention has been described in an illustrative manner, and it is to be understood that the terminology which has been used is intended to be in the nature of words of description rather than of limitation. It is now apparent to those skilled in the art that many modifications and variations of the present invention are possible in light of the above teachings. It is, therefore, to be understood that the invention may be practiced otherwise than as specifically described.

## Claims

1. A method for determining the presence of an odorous material on a fabric, the method comprising the steps of:
applying an indicator to the fabric with the indicator being a benzofurazan;
tagging the odorous material with the indicator;
exposing the fabric including the tagged odorous material to a light at a predefined wavelength to produce fluorescence of the tagged odorous material; and
observing the fluorescence of the tagged odorous material on the fabric.

2. The method as set forth in claim 1 wherein the observing step is further defined as observing the fluorescence of the tagged odorous material on the fabric through a bandpass filter.

3. The method as set forth in claim 1 or 2 wherein the benzofurazan is further defined as 4-hydrazino-7-nitrobenzofurazan (NBD-H) when the odorous material is an aldehyde or a ketone and/or the benzofurazan is further defined as 4-(N,N-dimethylaminosulfonyl)-7-piperazinobenzofurazan (DBD-PZ) when the odorous material is a carboxylic acid.

4. The method as set forth in any of claims 1 to 3 wherein the odorous material includes a carboxylic acid and further comprising the step of activating the carboxylic acid prior to the tagging step,
the activating step preferably includes reacting the carboxylic acid with 2,2'dipyridyldisulfide and triphenylphosphine to form a derivative of carboxylic acid including a pyridyl leaving group.

5. The method as set forth in any of claims 1 to 4 wherein the exposing step is further defined as exposing the fabric including the tagged odorous material to a light at a wavelength of from about 380 nm to about 500 nm to produce the fluorescence of the tagged odorous material.

6. The method as set forth in any of claims 1 to 5 wherein prior to the observing step, the method comprises the step of capturing an image of the exposed fabric including at least one illuminated portion of the exposed fabric representing the tagged odorous material.

7. The method as set forth in claim 6 wherein the at least one illuminated portion is further defined as a plurality of illuminated portions each exhibiting varying intensities of illumination corresponding to varying amounts of the tagged odorous material disposed on the exposed fabric, and
utilizing a processor configured to execute computer-readable instructions of a program, the method includes the step of generating a surface plot of the imaged fabric including the plurality of illuminated portions with the varying intensities of illumination.

8. A system for determining the presence of an odorous material on a fabric, with said system comprising:
said fabric including said odorous material;
an indicator applied to said fabric and configured to tag said odorous material to form a tagged odorous material, wherein the indicator is a benzofurazan;
at least one light source arranged about said fabric and configured to direct a light at a predefined wavelength on said fabric to produce fluorescence of said tagged odorous material on said fabric; and
an imaging device arranged about said fabric to capture an image of said fabric including at least one illuminated portion of said fabric representing said tagged odorous material present on said fabric, wherein the imaging device has preferably a lens and a bandpass filter positioned over said lens.

9. The system as set forth in claim 8 wherein said benzofurazan is further defined as one of 4-hydrazino-7-nitrobenzofurazan (NBD-H) when said odorous material includes an aldehyde or a ketone and/or 4-(N,N-dimethylaminosulfonyl)-7-piperazinobenzofurazan (DBD-PZ) when the odorous material includes a carboxylic acid.

10. The system as set forth in claims 8 or 9 further comprising a processor configured to execute computer-readable instructions that causes the processor to generate a surface plot of said imaged fabric including said at least one illuminated portion of said fabric exhibiting varying intensities of illumination representing varying amounts of said tagged odorous material present on said imaged fabric.

11. A method for determining the efficacy of a laundry product, said method comprising the steps of:
applying an odorous material to first and second fabrics;
applying an indicator to each of the first and second fabrics with the indicator being a benzofurazan;
tagging the odorous material on each of the first and second fabrics with the indicator;
washing the first fabric utilizing a laundry product;
exposing each of the first and second fabrics to a light at a predefined wavelength to produce fluorescence of the tagged odorous material on each of the first and second fabrics;
observing the fluorescence of the tagged odorous material on each of first and second fabrics, preferably through a bandpass filter; and
comparing the fluorescence of the observed first and second fabrics.

12. The method as set forth in claim 11 wherein the benzofurazan is further defined as 4-hydrazino-7-nitrobenzofurazan (NBD-H) when the odorous material includes an aldehyde or a ketone and/or 4-(N,N-dimethylaminosulfonyl)-7-piperazinobenzofurazan (DBD-PZ) when the odorous material includes a carboxylic acid.

13. The method as set forth in claim 11 or 12 wherein prior to the observing step, the method comprises the step of imaging each of the exposed first and second fabrics to produce first and second images with the first image including at least one illuminated portion of the exposed first fabric representing the tagged odorous material present on the first fabric and the second image including at least one illuminated portion of the exposed second fabric representing the tagged odorous material present on the second fabric.

14. The method as set forth in claim 13 wherein the at least one illuminated portion of the exposed first fabric is further defined as a plurality of illuminated portions of the exposed first fabric exhibiting varying intensities of illumination corresponding to varying amounts of the tagged odorous material on the exposed first fabric and the at least one illuminated portion of the exposed second fabric is further defined as a plurality of illuminated portions of the exposed second fabric exhibiting varying intensities of illumination corresponding to varying amounts of the tagged odorous material on the exposed second fabric, and utilizing a processor configured to execute computer-readable instructions, the observing step includes the steps of:
generating a first surface plot of the imaged first fabric including the plurality of illuminated portions exhibiting the varying intensities of illumination illustrating the varying amounts of the tagged odorous material present on the imaged first fabric; and
generating a second surface plot of the imaged second fabric including the plurality of illuminated portions exhibiting varying intensities of illumination illustrating the varying amounts of the tagged odorous material present on the imaged second fabric.

15. The method as set forth in claim 14 wherein the comparing step includes the steps of:
comparing the plurality of illuminated portions on the first surface plot with the plurality of illuminated portions on the second surface plot; and
observing a change in intensity of the illuminated portions on the first surface plot and the illuminated portions on the second surface plot.
